# EUROPEAN PATENT APPLICATION

(11) **EP 3 739 890 A1**
(43) Date of publication of application: **18.11.2020**
(21) Application number: 20174713.6
(22) Date of filing: 14.05.2020
(51) Int. Cl.: H04N 21/258, H04N 21/45, G06F 3/12, H04L 9/14, H04L 29/06, H04N 1/32, H04N 1/44

(54) **DATA TRANSMISSION APPARATUS, CONTROL METHOD FOR DATA TRANSMISSION APPARATUS, AND STORAGE MEDIUM**

(30) Priority: 17.05.2019 JP 2019093736
(71) Applicant: CANON KABUSHIKI KAISHA, OHTA-KU Tokyo 146-8501 (JP)
(72) Inventor: SUGAWARA, Kazuhiro, Ohta-ku, Tokyo 146-8501 (JP)
(74) Representative: Canon Europe Limited

(57) **Abstract**

A data transmission apparatus of the present invention changes control for data transmission based on whether the destination of image data is within the same specific region as the country where the source apparatus is installed. Specifically the preset invention comprises receiving information indicating a country where an apparatus at the data transmission destination set by the setting means is installed; obtaining information indicating a country where the data transmission apparatus is installed; and determining whether the country indicated by the information received by receiving the information and the country indicated by the information obtained by obtaining the information belong to same region including a plurality of countries.

## Description

### BACKGROUND OF THE INVENTION

### Field of the Invention

The present invention relates to a data transmission apparatus for transmitting data, a control method for the data transmission apparatus, and a storage medium.

### Description of the Related Art

Data transmission apparatuses for transmitting data are known.

Some of the data transmission apparatuses utilize a technique of determining whether country information included in a network address of its own apparatus (source apparatus) matches country information of a telephone number of a transmission target of data, and restricting transmission of the data unless the former information matches the latter information (Japanese Patent Laid-Open No. 2010-183340).

In a specific region including a plurality of countries, transmitting data (particularly, data including personal information) from the specific region to the outside of the region may violate the rules.

According to the related-art method, whether to restrict the transmission of the data or not is determined depending on whether the destination is located in the same country as the source apparatus, and is not determined depending on whether the destination is located in the specific region including the plurality of countries. Therefore, even when the destination is located in the specific region, the transmission of the data may be restricted for the reason that the source apparatus and the transmission destination apparatus are installed in different countries.

### SUMMARY OF THE INVENTION

According to a first aspect of the present invention there is provided a data transmission apparatus according to claims 1-17.

According to a second aspect of the present invention there is provided control method according to claim 18.

According to a third aspect of the present invention there is provided a non-transitory computer readable storage medium according to claim 19.

Further features of the present invention will become apparent from the following description of exemplary embodiments with reference to the attached drawings.

### BRIEF DESCRIPTION OF THE DRAWINGS

FIG. 1 illustrates a network configuration in relation to an embodiment.
FIG. 2 illustrates a hardware configuration of a data transmission apparatus according to the embodiment.
FIG. 3 illustrates a country setting screen and country setting in the data transmission apparatus according to the embodiment.
FIG. 4 is a flowchart illustrating a file transmission process in the data transmission apparatus according to the embodiment.
FIG. 5 is a flowchart illustrating a country information determination process in data transmission by the data transmission apparatus according to the embodiment.
FIG. 6 is a flowchart illustrating a transmission prohibition process in the data transmission by the data transmission apparatus according to the embodiment.
FIGS. 7A to 7C illustrate a sequential flow of operating screens in the data transmission apparatus according to the embodiment.
FIGS. 8A and 8B illustrate an error screen during execution of the data transmission by the data transmission apparatus according to the embodiment.
FIG. 9 illustrates certificate verification setting and transmission prohibition control setting in the data transmission apparatus according to the embodiment.
FIG. 10 is a flowchart illustrating another transmission prohibition process in the data transmission by the data transmission apparatus according to the embodiment.

### DESCRIPTION OF THE EMBODIMENTS

Embodiments for carrying out the present invention will be described below with reference to the drawings. It is to be noted that the following embodiments are not purported to limit the scope of the invention defined in Claims. Furthermore, all of combinations of the features described in the embodiments are not always essential for solutions proposed by the present invention. Each of the embodiments of the present invention described below can be implemented solely or as a combination of a plurality of the embodiments or features thereof where necessary or where the combination of elements or features from individual embodiments in a single embodiment is beneficial.

### First Embodiment

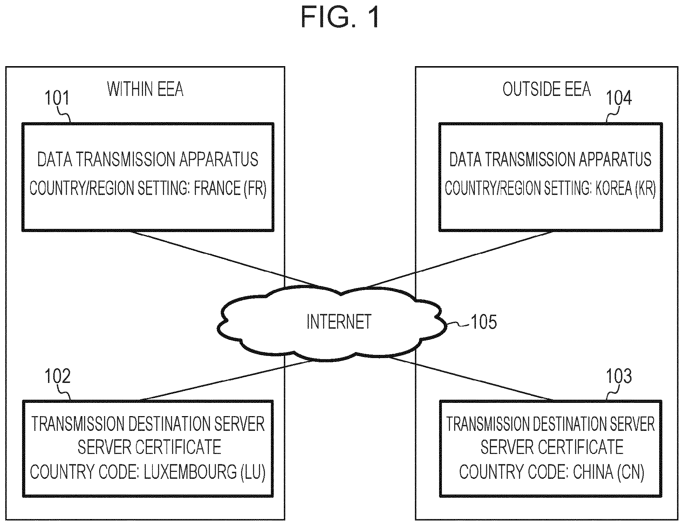

FIG. 1 is a block diagram illustrating a network configuration in relation to the present invention. In a first embodiment, a data transmission apparatus 101 and a data transmission apparatus 104, which are examples of data transmission apparatuses, and a transmission destination server 102 and a transmission destination server 103, which are examples of transmission destinations, are connected to be able to communicate with one another via the Internet 105.

The data transmission apparatus 101 and the data transmission apparatus 104 are described as being MFPs (Multi-Function Peripherals) that transmit data, such as image data, to the transmission destination server 102 and the transmission destination server 103.

The transmission destination servers 102 and 103 are file servers receiving files and storing the received files in their folders. Alternatively, the transmission destination servers 102 and 103 may be mail servers receiving electronic mails (E-mails) and transferring the received mails. The transmission destination servers 102 and 103 may be Web servers receiving data in accordance with HTTP. The transmission destination servers 102 and 103 may be servers each having several among the functions of the above-described servers together.

The data transmission apparatus 101 and the transmission destination server 102 are installed in a region of the EEA (European Economic Area) (called "within the EEA"). The data transmission apparatus 101 is installed in France. The transmission destination server 102 is installed in Luxembourg. The data transmission apparatus 104 and the transmission destination server 103 are installed in regions outside the EEA (called "outside the EEA"). The data transmission apparatus 104 is installed in Korea. The transmission destination server 103 is installed in China. The above-described installation locations are merely examples and may be each changed. In the region of the EEA (within the EEA), for the purpose of protecting personal information (such as names and mail addresses), transmitting the personal information to the outside of the EEA is prohibited in principle by the GDPR. GDPR stands for General Data Protection Regulation in EU.

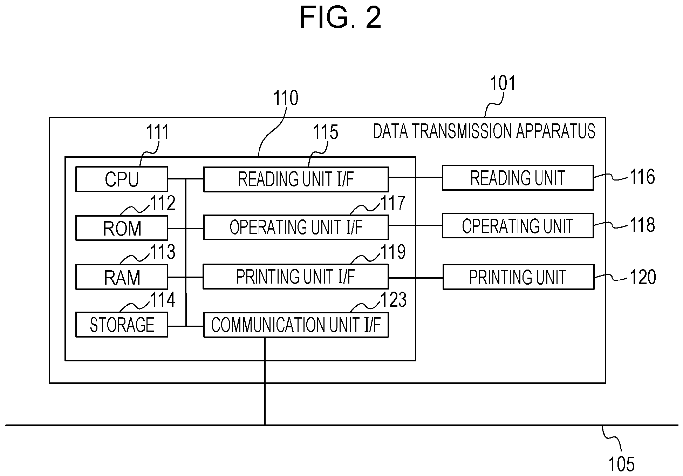

FIG. 2 is a block diagram illustrating a configuration of the data transmission apparatus 101. The data transmission apparatus 104 also has a similar configuration.

A control unit 110 including a CPU (Central Processing Unit) 111 controls the operation of the data transmission apparatus 101 in its entirely. The CPU 111 reads out control programs stored in a Read Only Memory (ROM) 112 or a storage 114 and executes various kinds of control such as read control and print control. The ROM 112 stores the control programs that can be executed by the CPU 111. The ROM 112 further stores a boot program, font data, and so on. A Random Access Memory (RAM) 113 is a main storage memory of the CPU 111 and is used as a work area and a temporary storage area where the various kinds of control programs stored in the ROM 112 and the storage 114 are to be each developed. The storage 114 stores image data, print data, an address book, various programs, and various kinds of setting information. The storage 114 is assumed to be a nonvolatile flash memory from which data is not erased regardless of power OFF/ON, but an SSD, a HDD, an eMMC, or the like may also be used as an auxiliary storage device. SSD is an abbreviation of Solid State Drive. HDD is an abbreviation of Hard Disk Drive, and eMMC is an abbreviation of embedded Multi Media Card.

It is assumed in the data transmission apparatus 101 that one CPU 111 executes processing illustrated in each of later-described flowcharts by using one memory (RAM 113), but the processing may be executed in another fashion. For example, the processing illustrated in each of the later-described flowcharts may be executed by cooperating plural units of CPUs, RAMs, ROMs, and storages. Alternatively, part of the processing may be executed by using a hardware circuit such as an ASIC or an FPGA. ASIC is an abbreviation of application specific integrated circuit. FPGA is an abbreviation of field-programmable gate array.

A reading unit I/F (interface) 115 connects a reading unit 116 and a control unit 110. The reading unit 116 is, for example, a scanner, and it reads an image on a document and converts the read data to binary image data. The image date created by the reading unit 116 is transmitted to an external apparatus, stored in an external recording device, or printed on a sheet of recording paper.

An operating unit I/F 117 connects an operating unit 118 and the control unit 110. The operating unit 118 includes a display and displays various kinds of information through the display. Furthermore, the operating unit 118 receives inputs and operations entered by users through a panel touch sheet stuck to the display or through hard keys. The operating unit 118 can also make a buzzer (not illustrated) generate sounds to be output to a user.

A printing unit I/F 119 connects a printing unit 120 and the control unit 110. The CPU 111 transfers image data, which is to be printed (i.e., image data as a printing target), to the printing unit 120 through the printing unit I/F 119. The printing unit 120 prints an image on a sheet of recording paper fed from a paper feed cassette (not illustrated).

A communication unit I/F 123 connects the Internet 105 and the control unit 110 in a wired manner. The Internet 105 may be a local area network (LAN), or it may be wirelessly connected. The communication unit I/F 123 can execute transmission of image data to a file server, transmission of E-mails to a mail server, and transmission of image data to an online storage. Furthermore, the communication unit I/F 123 receives a reference request and a change request for various kinds of setting information in the apparatus from a not-illustrated external PC (Personal Computer) that is connected to the Internet 105, and reads out or changes the various kinds of setting information in the storage 114. The transmission of the image data is performed by file transmission by using suitable one of protocols such as FTP, SMB, WebDAV, SMTP, HTTP, and SIP. FTP is an abbreviation of File Transfer Protocol. WebDAV is an abbreviation of Web-based Distributed Authoring and Versioning. SMTP is an abbreviation of Simple Mail Transfer Protocol. HTTP is an abbreviation of Hyper Text Transfer Protocol. SIP is an abbreviation of Session Initiation Protocol. A Web server application for processing HTTP also transmits various kinds of setting information to the PC and receives various kinds of setting information from the PC through the communication unit I/F. The Web server application is stored in the ROM 112 and is set on a memory of the RAM 113 after startup. The CPU 111 executes HTTP connection control through the communication unit I/F 123 by reading out the Web server application from the RAM 113 and executing it.

The data transmission apparatus 101 according to this embodiment has the above-described configuration and executes an operation of determining whether the destination of image data is within the same specific region as the country where the source apparatus is installed, and changing control for data transmission, by way of example, as described below.

In order to perform such control, setting of the country where the data transmission apparatus 101 is installed, setting for protection of personal information, and setting for confirmation of a server certificate are performed in advance.

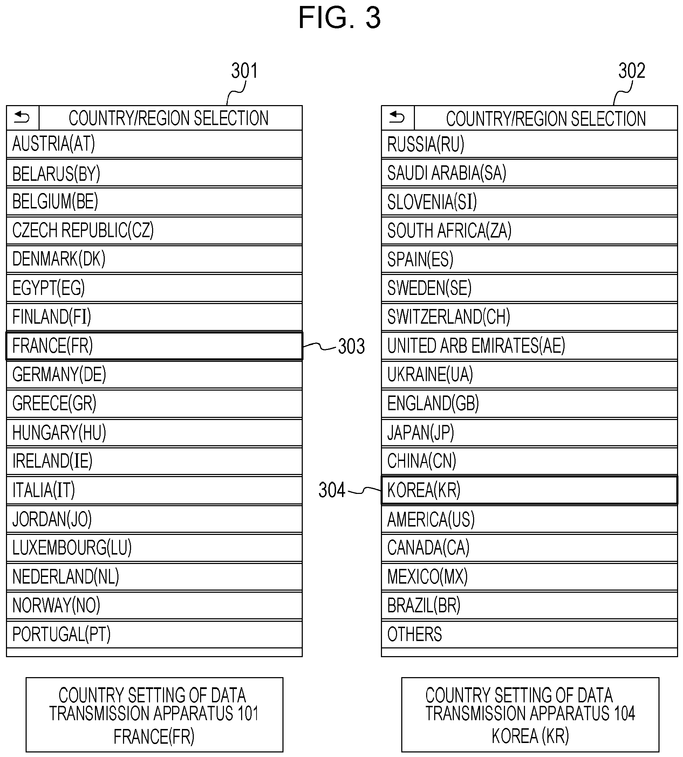

A screen 301 in FIG. 3 represents an example of a screen for setting information of the country where the data transmission apparatus 101 is installed. A screen 302 in FIG. 3 represents an example of a screen for setting information of the country where the data transmission apparatus 104 is installed.

In the data transmission apparatus 101, as illustrated in FIG. 3, the country where the data transmission apparatus 101 is installed can be set on the country/region selection screen 301. The country/region selection screen 301 is a setting screen that is displayed on the operating unit 118 when the data transmission apparatus 101 is initially started up. The country/region selection screen 301 is displayed not only when the data transmission apparatus 101 is initially started up, but also when a country/region selection key is depressed after depressing a menu 503 described later. Two characters put in a parenthesis after each country name represents a country name code specified in ISO3166-2. This embodiment is described, by way of example, in connection with the case in which the data transmission apparatus 101 is installed in France. In the country/region selection screen 301, the France (FR) 303 is selected. When an OK key (not illustrated) is depressed in such a state, the France (FR) 303 is set as the information of the country where the data transmission apparatus 101 is installed, and is stored in the storage 114 in correspondence with the France (FR) 303. Display of the country/region selection screen 301 can be scrolled by an up-down key (not illustrated) in the operating unit 118, and countries that cannot be displayed on the country/region selection screen 301 at one time can also be displayed by scrolling the screen.

On the other hand, in the data transmission apparatus 104, the country where the data transmission apparatus 104 is installed can be set on the country/region selection screen 302. The country/region selection screen 302 is a setting screen that is displayed on the operating unit 118 of the data transmission apparatus 104 when the data transmission apparatus 104 is initially started up. The country/region selection screen 302 is displayed not only when the data transmission apparatus 104 is initially started up, but also when the country/region selection key is depressed after depressing the menu 503 described later. Two characters put in a parenthesis after each country name represents the country name code specified in ISO3166-2. This embodiment is described, by way of example, in connection with the case in which the data transmission apparatus 104 is installed in Korea. In the country/region selection screen 302, the Korea (KR) 304 is selected. When the OK key (not illustrated) is depressed in such a state, the Korea (KR) 304 is set as the information of the country where the data transmission apparatus 104 is installed, and is stored in the storage 114 in correspondence with the Korea (KR) 304. Display of the country/region selection screen 302 can be scrolled by the up-down key (not illustrated) in the operating unit 118, and countries that cannot be displayed on the country/region selection screen 302 at one time can also be displayed by scrolling the screen.

Furthermore, the data transmission apparatus 101 stores, as a country information table (Table 1 described later), region information in the ROM 112 of the data transmission apparatus 101, the region information indicating one or more countries for which transmission of data, such as personal information, is permitted in correspondence with country setting or a destination place. The data transmission apparatus 104 also stores region information in the ROM 112 of the data transmission apparatus 104, the region information being similar to that stored in the data transmission apparatus 101.

The region information of destination-place EEA 1000 is set in Country Information Table, Table 1, as AT, ..., CH and so on as the country codes in conformity with the GDPR. DE 1002, indicating the country setting instead of the destination place, sets the same country codes as those of EEA 1000 on an assumption that the country codes indicated by the destination-place EEA 1000 are expressed by "EEA". Furthermore, the region information of destination-place Japan 1003 is set not only as JP, but also as destination-place EEA 1000 and destination-place US 1001. Moreover, a URL indicating the country code may be set as the region information as shown for JP 1004 and FR 1005. When JP 1004 or FR 1005 is set, the data transmission apparatus 101 may download the country code as the region information from a specific data server.

**Table 1 Country Information Table**

| Destination Place, Country Setting | Region Information (Country for which transmission of data such as personal information is permitted) |
|---|---|
| EEA 1000 | AT, BE, BG, HR, CY, CZ, DK, EE, FI, FR, DE, GR, HU, IE, IT, LV, LT, LU, MT, NL, PL, PT, RO, SK, SI, ES, SE, GB, IS, LI, NO, CH |
| US 1001 | BR, MX, CA, US |
| DE 1002 | "EEA" |
| Japan 1003 | JP, "EEA", "US" |
| JP 1004 | http://xxx.xxx.xxx.xxx/j apan_table.xml |
| FR 1005 | http://xxx.xxx.xxx.xxx/france_table.xml |

One or more countries to which data is to be transmitted may be determined, instead of using the table, by preparing a server for determining the countries for which the data transmission is permitted, and by inquiring the server about those countries. According to this embodiment, the data transmission apparatus is flexibly adaptable even for any country joining or leaving the EEA by obtaining the region information with the use of URLs such as JP1004 and FR1005, or from the server for determining the countries. In addition, whether a list of the country codes has been changed may be routinely checked by referring to the region information that is managed together with the country information.

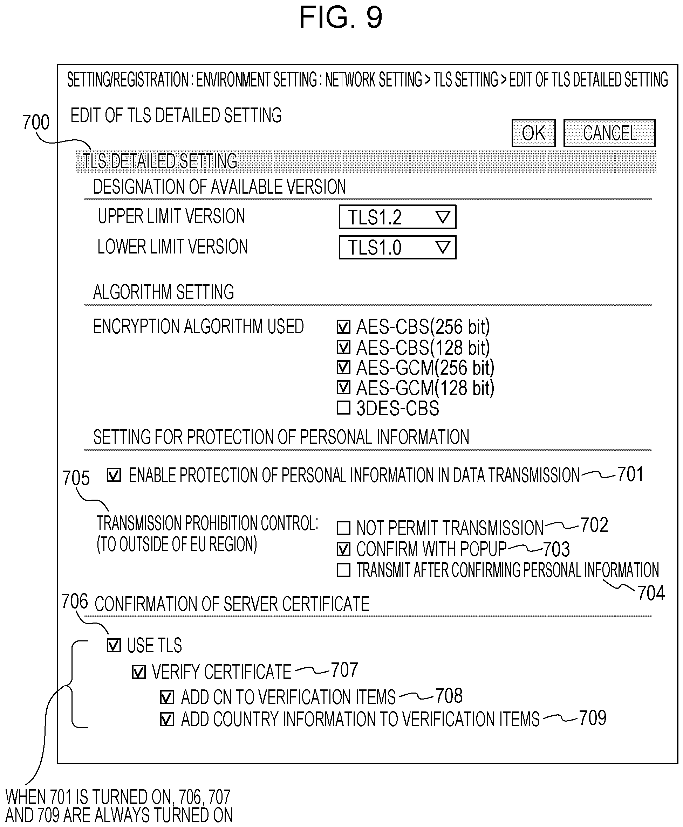

The setting to be performed in advance will be described below with reference to FIG. 9.

FIG. 9 illustrates a TLS detailed setting screen 700 that is displayed on a Web browser in an external PC when the external PC accesses the data transmission apparatus in accordance with HTTP. TLS is an abbreviation of Transport Layer Security.

The screen of FIG. 9 can accept the setting for protection of the personal information and the setting for confirmation of the server certificate in this embodiment.

Setting 701 "ENABLE PROTECTION OF PERSONAL INFORMATION IN DATA TRANSMISSION" and an item 705 "TRANSMISSION PROHIBITION CONTROL" are displayed as the setting for the protection of the personal information. The item 705 "TRANSMISSION PROHIBITION CONTROL" includes setting 702 "NOT PERMIT TRANSMISSION", setting 703 "CONFIRM WITH POPUP", and setting 704 "TRANSMIT AFTER CONFIRMING PERSONAL INFORMATION". Those settings become effective upon checking in each check box.

If the setting 702 "NOT PERMIT TRANSMISSION" is made effective, image data can no longer be transmitted to servers installed in countries for which the transmission of the image data is not permitted.

If the setting 703 "CONFIRM WITH POPUP" is made effective, the data transmission apparatus operates such that, when a user is going to transmit image data to the servers installed in the countries for which the transmission of the image data is not permitted, warning display for the user can be presented to alert the user about the transmission.

If the setting 704 "TRANSMIT AFTER CONFIRMING PERSONAL INFORMATION" is made effective, the data transmission apparatus 101 operates such that, before transmitting image data, the data transmission apparatus determines (judges) whether personal information is included in the image data. If the setting 704 "TRANSMIT AFTER CONFIRMING PERSONAL INFORMATION" is not made effective, the data transmission apparatus 101 operates to present warning display regardless of whether personal information is included in the image data. On the other hand, if the setting 704 "TRANSMIT AFTER CONFIRMING PERSONAL INFORMATION" is made effective, the data transmission apparatus 101 determines whether personal information is included in the image data to be transmitted. If it is determined that personal information is included, the data transmission apparatus 101 operates to present the warning display. If it is determined that personal information is not included, the image data is transmitted without presenting the warning display.

Furthermore, the screen of FIG. 9 accepts, as the setting for confirmation of the server certificate, setting 706 "USE TLS" and setting 707 "VERIFY CERTIFICATE". When the setting 701 "ENABLE PROTECTION OF PERSONAL INFORMATION IN DATA TRANSMISSION" is effective, the setting 706 "USE TLS" may be always held effective to be not changed.

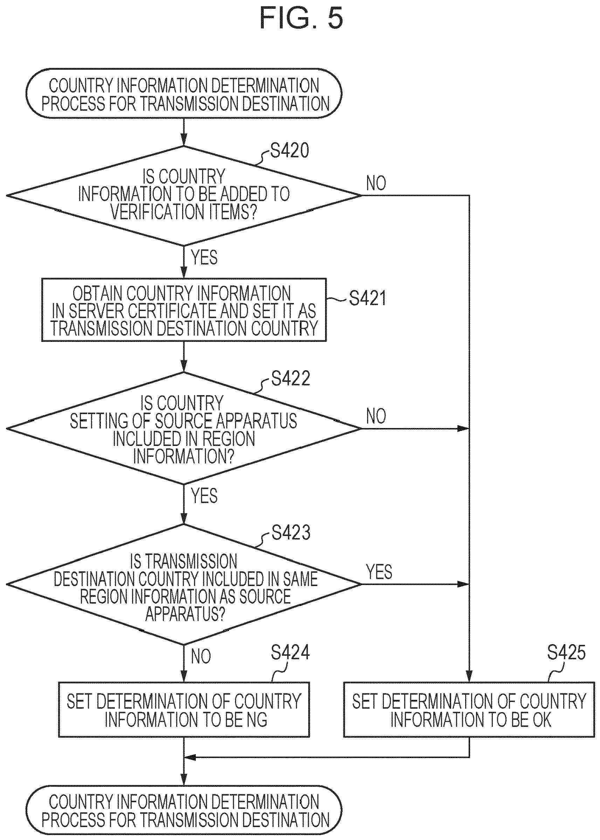

When the setting 707 "VERIFY CERTIFICATE" is effective, the screen of FIG. 9 can accept setting 708 "ADD CN TO VERIFICATION ITEMS" and setting 709 "ADD COUNTRY INFORMATION TO VERIFICATION ITEMS". With the setting 709 "ADD COUNTRY INFORMATION TO VERIFICATION ITEMS" being made effective, a country information determination process illustrated in FIG. 5 is executed.

The matters set on the screen of FIG. 9 are transmitted from the external PC to the data transmission apparatus 101, stored in the storage 114 of the data transmission apparatus 101, and thereafter referred to by the CPU 111.

While this embodiment is described in connection with an example of displaying the screen of FIG. 9 on the Web browser in the external PC, the same screen may be displayed on the operating unit 118 of the data transmission apparatus 101. When the settings are made using the screen displayed on the operating unit 118 of the data transmission apparatus 101, the set matters are stored in the storage 114 of the data transmission apparatus 101 by the CPU 111, and thereafter referred to by the CPU 111.

The settings to be performed on the data transmission apparatus 101 in advance are as per described above.

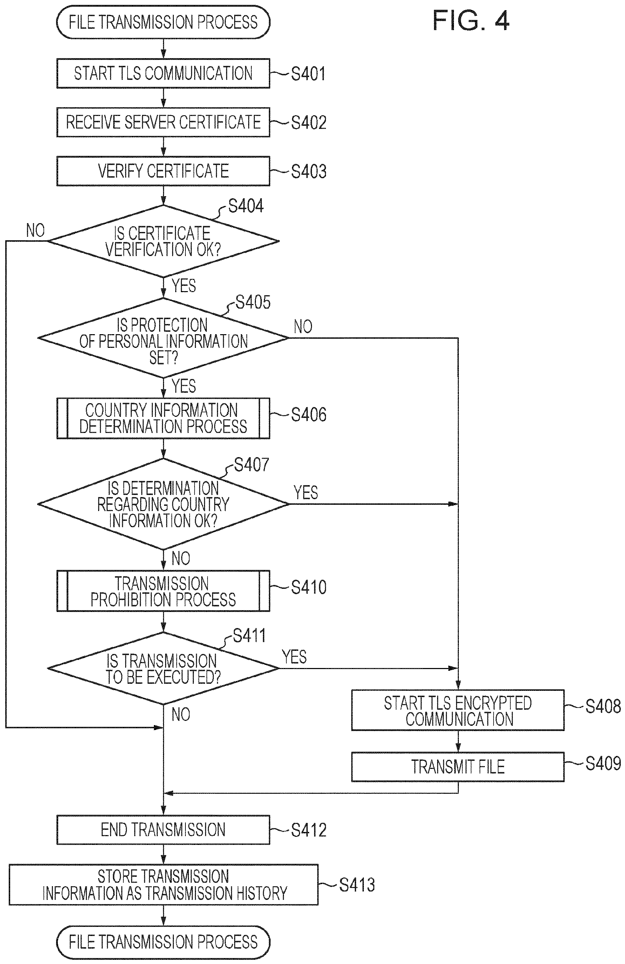

After the above-described settings have been performed in advance, the data transmission apparatus 101 executes processing illustrated in flowcharts of FIGS. 4 to 6.

FIGS. 4 to 6 are flowcharts when a file is transmitted from the data transmission apparatus 101 to the transmission destination servers 102 and 103. Those flowcharts are implemented with the CPU 111 of the data transmission apparatus 101 by executing programs stored in the ROM 112 or the storage 114 thereof. When a file is transmitted from the data transmission apparatus 104 to the transmission destination servers 102 and 103, processing represented by those flowcharts is executed with the CPU 111 of the data transmission apparatus 104 by executing programs stored in the ROM 112 or the storage 114 thereof. Various protocols can be optionally used for the transmission. While this embodiment is described on an assumption of file transmission using HTTP, SMTP, or the like, another protocol may also be applied insofar as the protocol enables data transmission to be executed in accordance with TLS communication. In connection with the flowcharts described in the present invention, the CPU 111 of the data transmission apparatus 101 performs display control for the operating unit 118 through control of the operating unit I/F 117, and detection of screen depression with a touch sensor. Moreover, the CPU 111 controls the communication unit I/F 123 and executes network communication with an external communication device via the Internet 105. The execution and control by the CPU 111 are performed while executing read and write from and into the storage 114, the RAM 113, and the ROM 112.

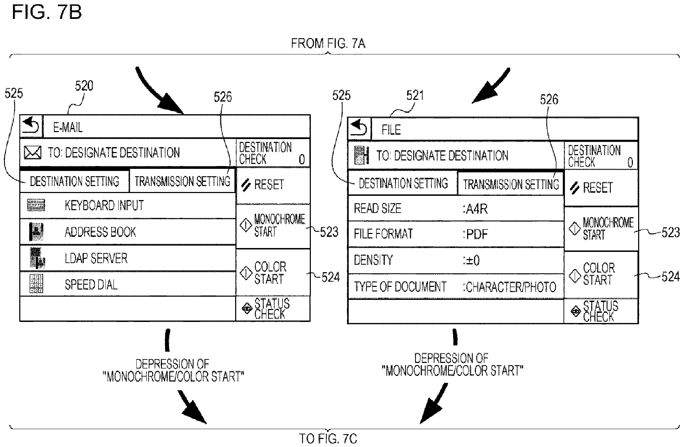

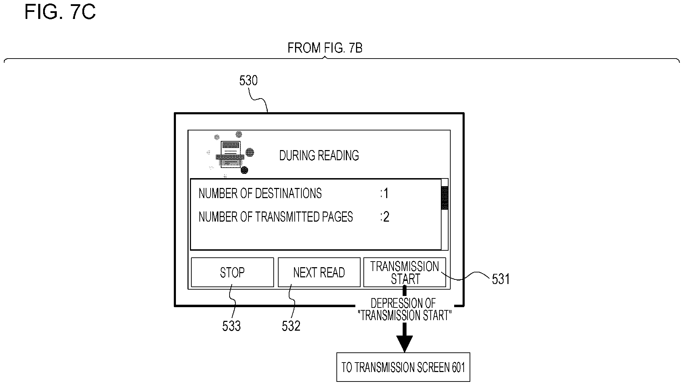

The flowchart of FIG. 4 is started upon a transmission start key being depressed in a state in which a data transmission destination has been received through the operating unit 118. The transmission start key is illustrated, by way of example, as TRANSMISSION START 531 in FIG. 7C described later. This embodiment is described in connection with an example of accepting, as the data transmission destination, the destination adaptable for the file transmission protocol and executing file transmission after converting data to the form of a file.

In S401, the CPU 111 starts the TLS communication by controlling the communication unit I/F 123 and causing the transmission destination server 103 to transmit "ClientHello" via the Internet 105. The data transmission apparatus 101 receives "ServerHello" from the transmission destination server 103 and then shifts to the next step.

In S402, the CPU 111 receives a server certificate from the server at the data transmission destination through the communication unit I/F 123. The server certificate includes the electronic signature, the common name: CN (Fully Qualified Domain Name, FQDN), the organization name, the country code (C), the expiration date of the certificate, the serial number, the revocation list reference, and so on.

In S403, when the setting 707 "VERIFY CERTIFICATE" is effective, the CPU 111 verifies the received server certificate and checks, for example, whether the electronic signature is genuine, and whether the receive time is within the expiration date. Furthermore, when the setting 708 "ADD CN TO VERIFICATION ITEMS" is effective, CN is compared with FQDN of the server at the transmission destination. Whether the receive time is within the expiration date is determined by obtaining time information from a not-illustrated timer in the data transmission apparatus 101, and by checking whether the obtained time information has not passed the expiration date of the certificate.

In S404, the CPU 111 determines whether the result of the certificate verification in S403 is OK. For example, if the electronic signature is genuine, the receive time is within the expiration date, and CN matches FQDN of the server at the transmission destination, the CPU 111 determines that the result of the certificate verification is OK. On the other hand, if the electronic signature is not genuine, or if the receive time is not within the expiration date, or if CN does not match FQDN of the server at the transmission destination, the CPU 111 determines that the result of the certificate verification is No Good (NG). Thus the data transmission apparatus 101 determines the verification result to be OK if there are no problems with the server certificate, and to be NG if there is a problem with the server certificate. If the result of the certificate verification is OK, the CPU 111 advances the processing to S405, and if the result of the certificate verification is NG, the CPU 111 advances the processing to S412.

If the personal information protection setting 701 is effective in S405, the CPU 111 advances the processing to S406, and if the personal information protection setting 701 is ineffective in S405, the CPU 111 advances the processing to S408. When the country set on the country/region selection screen 301 in FIG. 3 is one within the EEA, the personal information protection setting 701 may be always held effective such that it cannot be changed to be ineffective. The change of the setting to be ineffective may be disabled with the CPU 111 by transmitting, to the external PC, a HTML file in which the check cannot be erased, such as by displaying a checkbox of the personal information protection setting 701 in the grayed-out form.

In S406, the CPU 111 executes a country information determination process of determining, based on the country code in the server certificate, whether the transmission to the transmission destination server is permitted. The country information determination process will be described later with reference to the flowchart of FIG. 5.

If the result of the country information determination in S406 is OK in S407, the CPU 111 shifts to S408, and if the result of the country information determination in S406 is NG in S407, the CPU 111 shifts to S410.

In S408, the CPU 111 controls the communication unit I/F 123, exchanges a common key used in TLS encrypted communication, and starts the TLS encrypted communication.

In S409, upon depression of the TRANSMISSION START 531 in a scan screen 530, the CPU 111 controls the reading unit 116 to scan a document in accordance with the transmission setting that has been set with TRANSMISSION SETTING 526. Then, the CPU 111 converts image data, which has been produced by scanning the document, to a file in the file format set with the TRANSMISSION SETTING 526, and transmits the file to the destination designated with DESTINATION SETTING 525.

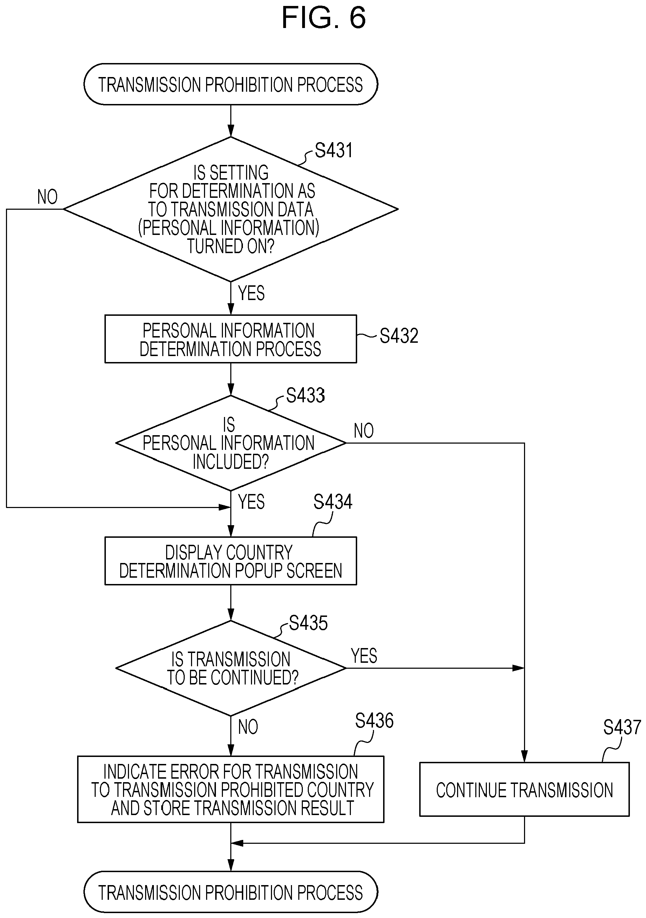

When the processing proceeds from S407 to S410, the CPU 111 executes in S410 transmission prohibition control in the case in which the result of the country information determination is NG. Details of the transmission prohibition control will be described later with reference to FIG. 6.

In S411, the CPU 111 determines, based on the result of the transmission prohibition control, whether the transmission of the image data is to be executed. If it is determined that the transmission of the image data is to be executed, the CPU 111 advances the processing to S408, and if it is determined that the transmission of the image data is not to be executed, the CPU 111 advances the processing to S412.

In S412, the CPU 111 closes the session with the transmission destination server 103 and ends the file transmission.

In S413, the CPU 111 stores, as transmission history, transmission information such as the transmission result of the image data, the communication time, and the number of transmitted pages. The transmission result of the image data may be notified from the apparatus at the destination target of the image data.

FIG. 5 is the flowchart of the country information determination process in S406. The flowchart of the country information determination process for the transmission destination is described in connection with an example of the country setting in which the data transmission apparatus 101 is installed in France (FR) within the EEA and the data transmission apparatus 104 is installed in Korea (KR) outside the EEA. Furthermore, the flowchart is described in connection with an example of the transmission destination country in which the transmission destination server 102 is installed in Luxembourg (LU) within the EEA and the transmission destination server 103 is installed in China (CN) outside the EEA.

In S420, the CPU 111 confirms the setting 709 "ADD COUNTRY INFORMATION TO VERIFICATION ITEMS". If the setting is ineffective, the CPU 111 shifts to S425, and if the setting is effective, it shifts to S421.

In S421, the CPU 111 extracts the country code from the server certificate that has been received from the transmission destination server in S402 and sets the transmission destination country. When the data transmission destination is the transmission destination server 103, the data transmission apparatus 101 sets China (CN) as the transmission destination country. On the other hand, when the data transmission destination is the transmission destination server 102, Luxembourg (LU) is set as the transmission destination country. Similarly, the data transmission apparatus 104 sets, as the transmission destination country, China (CN) for the transmission destination server 103 and Luxembourg (LU) for the transmission destination server 102.

In S422, the CPU 111 determines whether France (FR) set by the country setting 303 in the source apparatus is included in the region information corresponding to the country setting/destination place, listed in Table 1. Because France (FR) is included in the EEA information, the CPU 111 shifts to S423. If it is determined that France (FR) set by the country setting 303 in the source apparatus is not included in the region information corresponding to the country setting/destination place, listed in Table 1, the CPU shifts to S425.

In S423, the CPU 111 determines whether the transmission destination country having been set in S421 is included in the region information indicating the same region as the source apparatus. If it is determined that the transmission destination country is included, the CPU 111 shifts to S425, and if it is determined that the transmission destination country is not included, the CPU 111 shifts to S424. For example, in the case in which the data transmission apparatus 101 is the apparatus at the data transmission source, the CPU 111 shifts to S424 if the data transmission destination is the transmission destination server 103, and shifts to S425 if the data transmission destination is the transmission destination server 102.

In S424, the CPU 111 sets the result of the country information determination to be NG.

In S425, the CPU 111 sets the result of the country information determination to be OK.

Thus, in accordance with the flowchart of FIG. 5, whether the result of the country information determination is OK or NG can be confirmed on the basis of the country code in the server certificate and the country setting in the data transmission apparatus.

It is to be noted that the application of the present invention is not limited only to the data transmission apparatuses configured to determine whether they are installed within or outside the EEA, but that the present invention can be applied to all data transmission apparatuses configured to specify, based on country setting, region information including a plurality of countries for which data transmission is permitted, and to determine, based on the region information, whether the data transmission is permitted or prohibited.

FIG. 6 is the flowchart of the transmission prohibition process in S410.

If the setting 704 regarding the determination on whether the transmission data is personal information is effective (YES) in S431, the CPU 111 shifts to S432, and if the setting 704 is ineffective (NO) in S431, the CPU 111 shifts to S434.

In S432, the CPU 111 executes a process of determining whether the personal information is included in the transmission data. More specifically, the CPU 111 extracts character strings from an image of the transmission data by using OCR and determines whether the personal name, mail address, residence address, and so on are included in the character strings, or whether images of the face, the full-length portrait, the fingerprint, and so on of a person are included in the transmission data. Instead of performing the determination in the data transmission apparatus 101, the transmission data may be transmitted to an external server, and the result of the determination may be received from the external server.

If it is determined in S433 that the transmission data includes the personal information (YES), the CPU 111 advances the processing to S434, and if it is determined in S433 that the transmission data does not include the personal information (NO), the CPU 111 advances the processing to S437.

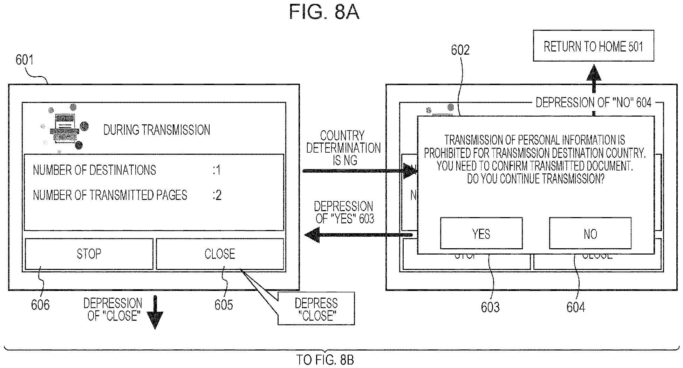

In S434, the CPU 111 displays, on the operating unit 118, a POPUP screen 602 (described later with reference to Figure 8A) to notify the user of the fact that the transmission to the country (outside the EEA) for which the transmission is not permitted is going to be performed, thus prompting the user to decide whether to continue the transmission. In this embodiment, the CPU 111 displays a message "TRANSMISSION OF PERSONAL INFORMATION IS PROHIBITED FOR TRANSMISSION TARGET COUNTRY. YOU NEED TO CONFIRM TRANSMITTED DOCUMENT. DO YOU CONTINUE TRANSMISSION?" and buttons YES 603 and NO 604. Alternatively, if the result of the personal information determination is YES and the personal information is specified, a message "TRANSMISSION OF PERSONAL INFORMATION IS PROHIBITED FOR TRANSMISSION DESTINATION COUNTRY. YOU NEED TO CONFIRM TRANSMITTED DOCUMENT" and only an OK button (not illustrated) are displayed so as to disable the continuation of the transmission. In that case, after the OK button is depressed, the CPU 111 shifts to S436.

If the YES 603 in the POPUP screen 602 is depressed in S435, the CPU 111 decides to continue the transmission and advances the processing to S437. If the NO 604 is depressed in S435, the CPU 111 decides not to continue the transmission and advances the processing to S436.

In S436, the CPU 111 decides not to execute the data transmission and stores, in the RAM 113, information indicating an error for the data transmission to the transmission prohibited country.

In S437, the CPU 111 decides to execute the data transmission and stores, in the RAM 113, information indicating the execution of the data transmission.

Thus, in accordance with the flowchart of FIG. 6, when the result of the country information determination is NG, the screen of asking the user to continue the data transmission is displayed on the operating unit 118 such that the user can decide whether to continue the transmission.

As described above with reference to the flowcharts of FIGS. 4 to 6, according to this embodiment, since the country information is obtained from the server certificate received from the transmission destination server, it is possible to determine whether the transmission to the country where the transmission destination server is installed is permitted, and to execute control for restricting the transmission.

If the personal information is not included in the transmission data, the transmission may be continued without further processing. In the case of aiming to prohibit leak of all information to servers outside the EEA, the transmission may always be prohibited for transmission destination servers, which have been determined to locate outside the EEA, by executing, in S410 of FIG. 4, only the processing of S436 in the flowchart. On the other hand, the data transmission apparatus may be equipped with means for permitting the transmission to a transmission destination server for which the transmission is permitted by contract even when the transmission destination server is installed in the country for which the transmission of the personal information is not permitted. In such a case, the transmission can be permitted by registering, in the storage 114, the transmission destination server for which the transmission is permitted or the domain name of that transmission destination server.

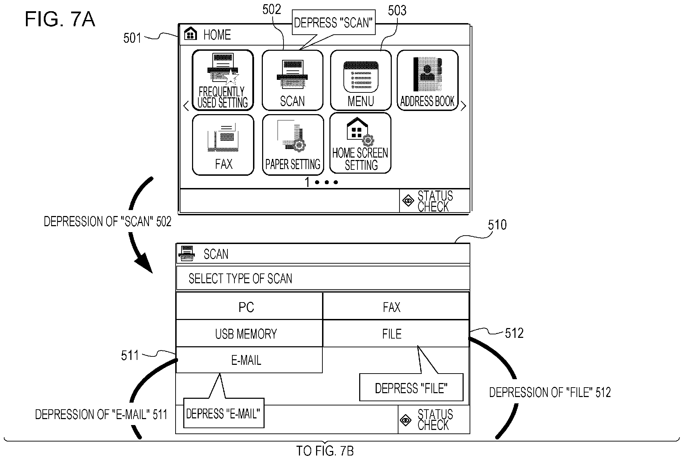

FIGS. 7A to 7C illustrate an example of operating screens that are displayed on the operating unit 118 before the transmission of a file or an E-mail is started. Those screens are displayed on the operating unit 118 with the CPU 111 of the data transmission apparatus 101 controlling the operating unit 118 through the operating unit I/F 117.

A home screen 501 is displayed upon startup of the data transmission apparatus. When depression of a SCAN button 502 is detected on the home screen 501, a scan screen 510 is displayed on the operating unit 118.

When the mail transmission is performed, an E-mail screen 520 is displayed upon depression of a button E-MAIL 511. When the file transmission is performed, a file screen 521 is displayed upon depression of a button FILE 512.

The mail screen 520 displays both DESTINATION SETTING 525 to designate a mail address as a transmission destination and TRANSMISSION SETTING 526 to designate transmission setting for reading a document image by the reading unit 116 and producing image data. The file screen 521 also displays both DESTINATION SETTING 525 to designate the destination of a transmission destination server as a transmission destination and TRANSMISSION SETTING 526 to designate transmission setting for reading a document image by the reading unit 116 and producing image data. A "during-reading" screen 530 is displayed when a button MONOCHROME START 523 or COLOR START 524 on each of the E-mail screen 520 and the file screen 521 is depressed.

The "during-reading" screen 530 displays a "during-reading" message "DURING READING" and read document information such as the number of destinations and the number of transmitted pages. While the "during-reading" screen 530 is being displayed, the data transmission apparatus 101 reads the document by the reading unit 116, produces the image data, executes file conversion on the basis of the transmission setting information, and stores the produced file in the RAM 113. The "during-reading" screen 530 further displays buttons STOP 533, NEXT READ 532, and TRANSMISSION START 531. When the STOP 533 is depressed, the reading is stopped and the screen is returned to the home screen 510. When the NEXT READ 532 is depressed, reading of a next page of the document is executed. When the TRANSMISSION START 531 is depressed, the reading is ended and the converted file is transmitted to the destination(s) set by the DESTINATION SETTING 525. Thereafter, the screen is shifted to a "during-transmission" screen 601.

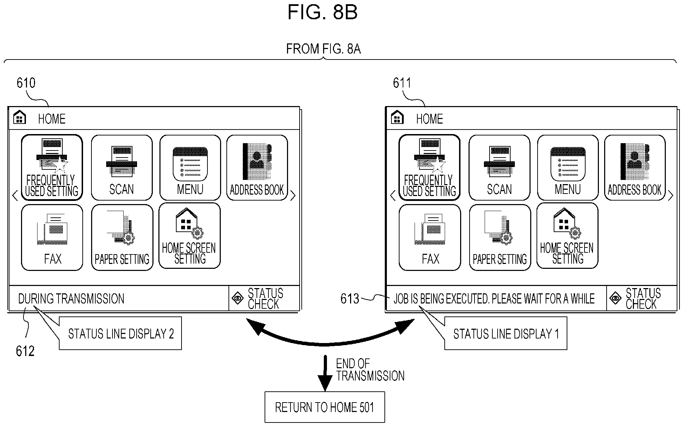

FIGS. 8A and 8B are explanatory views referenced to explain screens displayed on the operating unit 118 after the start of transmission of image data in the present invention.

The "during-transmission" screen 601 displays a "during-transmission" message "DURING TRANSMISSION" and transmission information indicating the number of destinations and the number of transmitted pages. The "during-transmission" screen 601 further displays two buttons, i.e., STOP 606 and CLOSE 605. When the button STOP 606 is depressed, the CPU 111 stops the file transmission, deletes the transmitted file, and terminates the transmission. When the button CLOSE 605 is depressed, the "during-transmission" screen 601 is closed and the screen is shifted to the home screen 610. If the result of the country determination in S434 is NG after the data transmission apparatus 101 has started the TLS communication on the "during-transmission" screen 601, the POPUP screen 602 is displayed. While the POPUP screen 602 is being displayed, the data transmission process is interrupted until depression of the button YES 603 or NO 604 is detected. Furthermore, if the result of the country determination is NG after the depression of the button CLOSE 605 has been detected, the POPUP screen 602 is displayed while a home screen denoted by 610 or 611 is being displayed. The POPUP screen 602 presents predetermined notifications. As examples of the predetermined notifications, the POPUP screen 602 in FIG. 8A presents a notification indicating that the transmission of the personal information is prohibited for the transmission destination country, a notification prompting the user to confirm the transmitted document, and a notification causing the user to select whether to execute the transmission or not.

The home screen 611 is a home screen displayed during the file transmission and presents status display 613 such as "JOB IS BEING EXECUTED. PLEASE WAIT FOR A WHILE". The display of the home screen 610 is shifted to display the home screen 611 if a certain time elapses while the transmission is being executed. The home screen 610 represents a home screen displayed during second file transmission, and status display 612 "DURING TRANSMISSION" is presented on the home screen 610. The status display 612 is shifted to that in the home screen 611 if a certain time elapses while the transmission is being executed. Upon end of the transmission, the status line display is erased and the home screen 610 or 611 displayed during the transmission is returned to display the home screen 501.

As described above, by adding, in the data transmission apparatus, the verification item of the country information to the setting for the protection of the personal information and to the confirmation of the server certificate, the data transmission apparatus can prohibit or restrict data transmission from a specific region to a region for which transmission of personal information is not permitted. Furthermore, when the user of the data transmission apparatus is going to transmit data without being aware of the transmission destination, the data transmission apparatus can display the POPUP screen 602 on the operating unit 118, thus prompting the user to confirm the transmission data.

While the above embodiment has been described in connection with an example in which whether to display the predetermined notification screen for prompting the user to select execution or non-execution of the data transmission is decided depending on whether the data transmission destination is outside the EEA or within the EEA, the present invention is not limited to such an example. In another example, a plurality of countries, not limited to the countries in the EEA, may be registered as regions for which the data transmission is permitted, and the above-described predetermined notification may not be displayed if the data transmission is destined for the registered regions and may be displayed if the data transmission is destined for countries outside the registered regions.

### Second Embodiment

The above first embodiment has been described in connection with the example in which whether to display the POPUP screen 602 in FIG. 8A or to execute the data transmission without displaying the POPUP screen 602 is decided depending on whether data is transmitted to the outside of the EEA.

A second embodiment is described in connection with an example in which the data transmission apparatus operates to decide whether to perform the data transmission or not depending on whether data is transmitted to the outside of the EEA. The configurations of the network and the data transmission apparatus 101, and so on are similar to those in the first embodiment, and hence detailed description of those configurations is omitted.

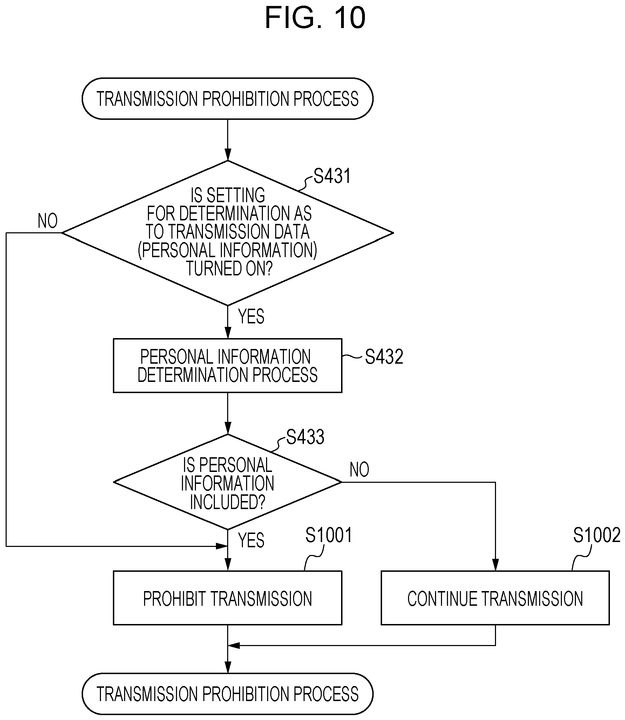

In the second embodiment, processing illustrated in a flowchart of FIG. 10 is executed instead of the processing in the first embodiment, illustrated in the flowchart of FIG. 6.

Processing in S431 to S433 in FIG. 10 is similar to that in the first embodiment, and hence description of that processing is omitted.

In S1001, the CPU 111 shifts to control of not continuing the communication and sets an error for transmission to the transmission prohibited country in the transmission results.

In S1002, the CPU 111 shifts to control of continuing the transmission without determining the occurrence of the transmission error, and continues the file transmission.

With the above-described processing, the data transmission apparatus can operate to decide whether to perform the data transmission or not depending on whether data is transmitted to the outside of the EEA.

While the second embodiment has been described in connection with the example in which whether to perform the data transmission or not is decided depending on whether the data transmission destination is outside or within the EEA, the present invention is not limited to that example. In another example, a plurality of countries, not limited to the countries in the EEA, may be registered as regions for which the data transmission is permitted, and the transmission may be performed if the data transmission is destined for the registered regions and may not be performed if the data transmission is destined for countries outside the registered regions.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. It will of course be understood that this invention has been described above by way of example only, and that modifications of detail can be made within the scope of this invention.

## Claims

1. A data transmission apparatus comprising setting means (118) for setting a data transmission destination, and transmitting means (123) for transmitting data to the data transmission destination set by the setting means, the data transmission apparatus further comprising:
receiving means (117) for receiving information indicating a country where an apparatus at the data transmission destination set by the setting means is installed;
obtaining means (111) for obtaining (S421) information indicating a country where the data transmission apparatus is installed; and
determining means (111) for determining (S406) whether the country indicated by the information received by the receiving means and the country indicated by the information obtained by the obtaining means belong to the same region including a plurality of countries,
wherein the transmitting means is configured to transmit the data in a case where the determining means determines that both the countries belong to the same region, and the transmitting means is configured to not transmit the data in a case where the determining means determines that the countries do not belong to the same region.

2. The data transmission apparatus according to Claim 1, further comprising judging means for judging whether personal information is included in the data,
wherein the transmitting means is configured to transmit the data in a case where the determining means determines that the countries do not belong to the same region and the judging means judges that the personal information is not included in the data, and the transmitting means is configured to not transmit the data in a case where the determining unit determines that the countries do not belong to the same region and the judging means judges that the personal information is included in the data.

3. A data transmission apparatus comprising setting means (118) for setting a data transmission destination, and transmitting means for transmitting data to the data transmission destination set by the setting means,
the data transmission apparatus further comprising:
receiving means (117) for receiving information indicating a country where an apparatus at the data transmission destination set by the setting means is installed;
obtaining means (111) for obtaining (S421) information indicating a country where the data transmission apparatus is installed; and
determining means (111) for determining (S406) whether the country indicated by the information received by the receiving means and the country indicated by the information obtained by the obtaining means belong to the same region including a plurality of countries,
wherein a predetermined notification is given to a user in a case where the determining means determines that the countries do not belong to the same region.

4. The data transmission apparatus according to Claim 3, further comprising judging means for judging whether personal information is included in the data,
wherein the transmitting means is configured to transmit the data in a case where the determining means determines that the countries do not belong to the same region including the plurality of countries and the judging means judges that the personal information is not included in the data, and the predetermined notification is given to the user in a case where the determining means determines that the countries do not belong to the same region including the plurality of countries and the judging means judges that the personal information is included in the data.

5. The data transmission apparatus according to Claim 3 or Claim 4, wherein the predetermined notification is not given to the user in a case where the determining means determines that the countries belong to the same region.

6. The data transmission apparatus according to any one of Claims 3 to 5, wherein the predetermined notification is a notification prompting the user to select whether to transmit the data to the transmission destination set by the setting means.

7. The data transmission apparatus according to any one of Claims 3 to 5, wherein the predetermined notification is a notification prompting the user to select whether to transmit the data.

8. The data transmission apparatus according to any one of Claims 3 to 7, wherein the transmitting means is configured to transmit the data in a case where the user makes selection to transmit the data after the predetermined notification has been given, and the transmitting means is configured to not transmit the data in a case where the user makes selection not to transmit the data after the predetermined notification has been given.

9. The data transmission apparatus according to any previous claim, further comprising selecting means for selecting whether to execute the determination by the determining means.

10. The data transmission apparatus according to any preceding claim, further comprising registering means for registering the information indicating the country where the data transmission apparatus is installed.

11. The data transmission apparatus according to any preceding claim, wherein the obtaining means is configured to obtain, from an external server, the information indicating the country where the data transmission apparatus is installed.

12. The data transmission apparatus according to Claim 11, further comprising designating means for designating the external server.

13. The data transmission apparatus according to any preceding claim, further comprising changing means for changing the information indicating the country where the data transmission apparatus is installed.

14. The data transmission apparatus according to any preceding claim, wherein the information indicating the country where the apparatus at the data transmission destination set by the setting means is installed is included in a server certificate.

15. The data transmission apparatus according to any one of Claims 1-14, wherein the same region including the plurality of countries is European Economic Area.

16. The data transmission apparatus according to any preceding claim, further comprising reading means for reading a document,
wherein the data is image data produced by reading the document with the reading means.

17. The data transmission apparatus according to any preceding claim, further comprising printing means.

18. A control method for a data transmission apparatus comprising setting means for setting a data transmission destination, and transmitting means for transmitting data to the data transmission destination set by the setting means, the control method comprising:
receiving information indicating a country where an apparatus at the data transmission destination set by the setting means is installed;
obtaining (S421) information indicating a country where the data transmission apparatus is installed; and
determining (S406) whether the country indicated by the information received by receiving the information and the country indicated by the information obtained by obtaining the information belong to the same region including a plurality of countries,
wherein the transmitting means transmits the data in a case where a result of the determination is that the countries belong to the same region, and the transmitting means does not transmit the data in a case where the result of the determination is that the countries do not belong to the same region.

19. Anon-transitory computer readable storage medium storing a program that causes a computer to execute a method according to claim 18.
